(19) Europäisches Patentamt
European Patent Office
Office européen des brevets

(11) EP 0 934 983 A1

(12) **EUROPEAN PATENT APPLICATION**

(43) Date of publication:
11.08.1999 Bulletin 1999/32

(51) Int Cl.⁶: **C08L 101/00**, C08L 27/06
// (C08L27/06, 75:04)

(21) Application number: 99300831.7

(22) Date of filing: 04.02.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 04.02.1998 GB 9802380

(71) Applicants:
• **Magna Investments N.V.**
**6394 Zug (CH)**
• **Limburgse Vinyl Maatschappij N.V. S.A.**
**3980 Tussenderlo (BE)**

(72) Inventors:
• **Startup, Robert James**
**c/o Magna Interior Syst.Lim.**
**Kent ME14 9XT (GB)**
• **Bouwman, Bernardus T.**
**c/o Limburgse Vinyl M. N.V.**
**3980 Tessenderlo (BE)**

(74) Representative: **Cockbain, Julian, Dr.**
**Frank B. Dehn & Co.,**
**European Patent Attorneys,**
**179 Queen Victoria Street**
**London EC4V 4EL (GB)**

(54) **Polymer compositions**

(57)    Improved polymer composites are provided for use in techniques such as slush molding. The composites may be used to provide items for motor vechicles such as dash boards. The polymer composites comprise a matrix of a thermoplastic polymer containing therein a vinyl polymer.

Printed by Jouve, 75001 PARIS (FR)

## Description

The present invention relates to polymer composites and in particular, but not exclusively, to polymer composites for use within the automobile industry.

It is well established practice amongst manufacturers of items for motor vehicles such as vehicle trim panels, arm-rests, dashboards etc., to mould them from polyvinylchloride (PVC) compounds using slush moulding.

Slush moulding is a technique well known in the art for moulding items from PVC. Prior to moulding, the PVC may be supplied in the form of a liquid or more recently as a powder. In the latter case the moulding process is known as Drysol casting. The technique of Drysol casting is set forth more fully in US-A-4562025 but essentially comprises placing the PVC-compound in a powder box beneath a heated mould part, repeatedly inverting the mould in order to melt the powder onto the mould surface, and fusing or curing the moulded part in an oven before the part is removed from the mould.

The long history and experience in using PVC to mould vehicle parts means that those skilled in the art are used to using it and its plentiful supply makes it relatively inexpensive.

There are however drawbacks inherent in using PVC. In particular, increasingly stringent safety specifications mean that PVC characteristics prevent it from being used in some applications. For example covers for vehicles airbags must tear without shattering when the airbag bursts through the cover, since this shattering could result in sharp fragments flying towards occupants of the vehicle. This must hold for all operating conditions that might be encountered. Therefore there is currently a requirement, for example, that vehicle panels which include an airbag cover must not shatter at temperatures down to -30°C when struck with a given force. Likewise the moulded polymer must be adequately resistant to heat ageing requirements (eg. 500 hours at 120°C in a gear oven after being backfoamed with a semi-rigid polymer such as a polyurethane). Unfortunately, known PVCs do not satisfy these requirements and so alternative materials must be used.

Some in the art have turned to using thermoplastic polyurethanes (TPUs) to form dashboards including vehicle airbag covers since TPUs can satisfy the requirement that they should not shatter at low temperatures such as -30°C. TPUs however present their own drawbacks. In particular their elasticity tends to increase to an undesirable level at higher temperatures when compared to PVC-compounds, making it difficult to meet high temperature specifications, for example, that burst-through airbags must function at 80°C.

Previously attempts have been made to combine a TPU and a PVC-compound by simply mixing the respective powders together. However it was discovered that the two powders had formed an unstable mixture which caused a partial separation of the respective powders in the powder box of a slush moulding tool. Moreover, the moulded product, after processing of this mixture, was an inhomogeneous film which consisted of separate particles and agglomerates of the PVC and TPU and which as a result did not possess suitable mechanical properties. It was therefore concluded that, as is common with chemically dissimilar polymers, these two materials could not form a uniform composite with the desired mechanical properties.

However, we have now found that composite polymer materials may be produced using vinyl and thermoplastic polymers, for example urethane, olefin, or elastomer thermopolymers (TPUs, TPOs and TPEs), where the polymers are admixed during compounding, for example by admixture in a solution, melt or solid phase.

Viewed from one aspect the present invention thus provides a polymer composite comprising a matrix of a thermoplastic polymer containing therein a vinyl polymer.

In the composite of the invention, the matrix thermoplastic polymer and the vinyl polymer will generally be in separate phases, ie. the matrix will encapsulate particles of the vinyl polymer. The particle size may depend to a certain degree on the particle sizes of the thermoplastic and vinyl polymers used in the preparation of the composite - however sizes corresponding to those typically termed powders and to the particle sizes typically used in slush moulding may generally be used; thus for example starting polymer mean particle sizes of the order of micrometers, eg. up to 1000 µm, for example 20-1000 µm for the vinyl polymer and 1 to 1000 µm for the thermoplastic polymer, may be used. Preferably, the particle size of the thermopolymer will be less than that for the vinyl polymer. In the resultant composite the embedded vinyl polymer will conveniently be substantially uniformly distributed.

The composite of the present invention may comprise a single vinyl polymer and one other thermopolymer, eg. a urethane, olefin or elastomer polymer; or the composite may comprise more than one thermopolymer, eg. a vinyl polymer and/or more than one polymer selected from the group comprising urethane, olefin and elastomer polymers.

Viewed from a further aspect the invention also provides a process for the preparation of a polymer composite, said process comprising admixing a vinyl polymer and a thermoplastic polymer at a temperature at which both polymers are molten.

Viewed from a further aspect, the invention provides a particulate composition comprising a vinyl polymer and particles of thermoplastic polymer, said polymers having a common processing temperature.

By a common processing temperature it is meant that there must be a temperature at which each of the two polymers is in a stable molten state, ie. a temperature beneath that at which thermal degradation is unacceptable. Thermal degradation is manifested by phenomena such as discolouration, burning, hydrogen chloride release (from PVC), mould adhesion and reduced mechanical properties. PVC for example will generally have processing temperatures of up to 250°C.

Viewed from a yet still further aspect, the invention also provides the use in a method of moulding, in particular a method of slush moulding, of a particulate composition according to the invention.

The method of moulding may be any suitable method in which at least partial melting of the polymers occurs. For example the moulding method may be injection moulding, spray moulding or extrusion. Preferably, however, the mixture is used in rotational moulding, e.g. Drysol casting, since this is a relatively straightforward technique and it allows relatively careful control of the temperature of the mould for melting the mixture.

Viewed from a yet further aspect, the invention provides a moulded article comprising a polymer composite according to the invention.

Viewed from a still further aspect, the invention provides the use of a vinyl polymer and/or a thermoplastic polymer for the manufacture of a composition or composite according to the invention.

The composition of the invention may be used in a method of moulding of any industrial parts, but is preferably used in a method of moulding parts for automotive vehicles, most preferably trim panels, arm rests, fascias, airbag covers or steering wheel covers, especially preferably covers for burst-through airbags.

The vinyl and thermoplastic polymers used in the preparation of the composites of the invention are polymers capable of forming a matrix-like structure.

The polymer composites of the invention comprise a structure in which a vinyl polymer is embedded in one or more thermopolymer(s), for example urethane polymers, olefin polymers or elastomer polymers; thereby giving a matrix-like structure after the polymer composite has been processed.

The composites of the present invention differ from the earlier PVC/TPU mixtures mentioned above since such known mixtures do not comprise a structure where the PVC is embedded in the TPU to give a matrix-like structure after processing.

The relative proportions of the vinyl polymer and the thermopolymer in the composites of the invention will depend on the properties, e.g. mechanical properties, desired for the moulded products. In general the ratio of vinyl polymer to the thermopolymer may lie in the range 1:99 to 99:1 by weight, especially 50:50 to 99:1, more especially 80:20 to 97:3, particularly 85:15 to 95:5 and most particularly 90:10. The composites preferably contain a larger proportion of the vinyl polymer than the thermopolymer as thereby to retain the desirable properties of vinyl polymers (such as higher temperature integrity and UV stability) and allow familiar processing methods to be used in their preparation.

The presence of the thermopolymer, eg. a urethane, olefin or elastomer polymer which lends a desirable degree of thermoplasticity, enables one to manufacture parts which are less brittle at low temperatures and may therefore satisfy low temperature requirements.

Indeed polymer composites which are able to pass standard low temperature tests are advantageous and novel in their own right and therefore when viewed from a further aspect the present invention provides a polymer composite comprising a vinyl polymer and a thermopolymer, eg. a polymer selected from urethane, olefin and elastomer polymers, which, when struck by a ball with an impact energy of at least 1J, preferably at least 5J, more preferably at least 10J and most preferably at least 11.2J at a temperature lower than-20°C, preferably lower than -25°C, particularly -30°C, more particular -50°C does not fragment. The size of the test piece (eg. a square test piece about 1 mm thick) is preferably at least 25cm$^2$ and most preferably 75cm$^2$.

As mentioned above, the polymer composites of the present invention comprise a matrix-like structure wherein the vinyl polymer is embedded in a thermopolymer, preferably a urethane, olefin or elastomer polymer. The polymers used may be homopolymers or copolymers, for example vinyl polymers, urethane polymers, olefin polymers or elastomer polymers for the embedded material and also for the matrix material. Where copolymers are used however, it is preferred that the vinyl, urethane, olefin or elastomer comonomers should constitute the major proportion by weight of the copolymer.

While the embedded polymer is preferably a vinyl polymer and the matrix polymer is preferably a thermoplastic polymer, the reverse can be the case.

The vinyl monomers in the vinyl polymer may be any conventional vinyl monomer, e.g. vinyl halides (such as vinyl chloride and vinyl fluoride), vinyl esters (such as vinyl acetate), vinyl carbazole, etc. Vinyl halide monomers however are preferred, especially vinyl chloride.

The matrix material is preferably a thermoplastic olefin polymer (TPO) or a thermoplastic elastomer (TPE), or most preferably a thermoplastic urethane polymer (TPU). In the urethane polymer, the urethane monomer and any non-urethane comonomer, may be any conventional urethane monomer or non-urethane comonomer capable of polymerization to form a thermoplastic urethane polymer. In the olefin polymer, the olefin monomer and any non-olefin comonomer, may be any conventional olefin monomers (eg. $C_{2-6}$ $\alpha$-olefins, especially ethylene or propylene) or non-olefin comonomers capable of polymerization to form a thermoplastic olefin polymer. In the elastomer, the elastomer monomers and comonomers, may be any conventional monomers capable of polymerization to form a thermoplastic elastomer polymer.

Desirably, vinyl and urethane, olefin or elastomer polymers are used which have similar processing temperatures, i.e. preferably within a 20°C range and most preferably within a 10°C range. The processing temperatures are preferably within the range 180-250°C and most preferably are approximately 230°C. More particularly the polymers used have a common processing temperature as discussed above and are processed to produce the composite at such a temperature.

The composites according to the invention may contain further components besides the vinyl polymer and thermoplastic polymers, for example stabilisers, plasticisers, pigments, processing aids and fillers.

The composite may be produced by bringing the vinyl polymer and thermopolymer into a liquid phase, e.g. by dissolving in a solvent or solvent mixture and thereafter removing the solvent, or more preferably by heating a powder mixture containing the polymers to a temperature above their melting temperatures and thereafter allowing the melt to cool. Preferably the composite is prepared in a moulding technique (e.g. slush moulding, injection moulding, etc.). However the composite may if desired be formed, e.g. as a granulate, before being used in a moulding technique.

In certain embodiments of the invention, the thermoplastic polymer component may be replaced by other polymers capable of acting as a matrix for the vinyl polymer.

The invention will now be described further with reference to the following non-limiting Examples.

Example 1

Preparation of composite

A composite was prepared using a thermoplastic polyurethane (TPU), supplied in powder form by Benecke Kaliko under reference number BKZ1 and a PVC supplied by the Limburgse Vinyl Maatschappij N. V. under reference number TA97-10.

The TPU has a melting point of 170-180°C, a post-moulding shrinkage of 1.08% and a processing temperature of 200-220°C. The PVC has a processing temperature of 200-240°C and a post-moulding shrinkage of 1.15%. The PVC contains a stabilizer, a plasticizer and a release agent.

One hundred parts by weight of a suspension-polyvinylchloride resin (S-PVC) were dryblended at ambient temperature and then transferred to a chamber heated to 100°C by an oil jacket. A stabiliser package, plasticisers, pigments and processing aids were added with a total quantity of ninety parts by weight and mixed in the PVC resin to produce a premixture. TPU powder was frozen in liquid nitrogen and ground to give particle sizes of smaller than about 80-100 μm. Fifty parts by weight of this ground TPU was mixed into the premixture and the mixture was cooled back down to ambient temperature to give a composition in the form of a dry powder.

The powder was placed in the powder box for a rotational slush moulding tool. The nickel tool was pre-heated to 195°C and rotated to coat the tool in powder, with the temperature being increased to 230°C. The powder melted onto the tool to an approximately even thickness of about 1mm. Rotation was then stopped and the tool was transferred to a curing oven at 200°C to fuse the part. The tool and part were allowed to cool to 50°C after which the moulded part was stripped from the tool. The moulded part was then tested for compliance with the falling ball test.

Example 2

A test piece measuring 75mm x 100mm was cut from the moulded part and placed on a test surface. A spherical steel ball, 50mm in diameter and having a mass of 500g, was then suspended 230mm centrally above the test piece. The temperature of the test piece was reduced to -30°C/-50°C. The ball was then released from rest and allowed to fall onto the test piece. The energy of the impact was equal to the potential energy of the ball prior to be dropped (assuming heating of the ball due to the air friction to be negligible and that the ball is brought to complete rest by the impact).

Thus:

$$E = mgh$$

Where E is the impact energy
m is the mass of the ball
g is the acceleration due to gravity (taken to be ms$^{-2}$)
h is the distance the ball falls

In this example therefore

$$E = 0.5 \text{ x } 9.81 \text{ x } 0.23 \; 11.28J$$

The test piece was removed from the apparatus and examined. This examination revealed that the test piece had not shattered and had maintained its integrity.

**Claims**

1. A polymer composite comprising a matrix of a thermoplastic polymer containing therein a vinyl polymer.

2. A composite as claimed in claim 1 wherein said vinyl polymer is embedded in the thermoplastic polymer.

3. A composite as claimed in either one of claims 1 or 2 wherein the particle size of the thermoplastic polymer is less than the particle size of the vinyl polymer.

4. A composite as claimed any one of claims 1 to 3 wherein said thermoplastic polymer is a urethane, olefin or elastomer polymer.

5. A composite as claimed in claim 4 wherein said thermoplastic polymer is a urethane.

6. A composite as claimed in any one of claims 1 to 5 wherein said composite comprises a larger portion of vinyl polymer than thermoplastic polymer.

7. A composite as claimed in claim 6 wherein the ratio of vinyl polymer to thermoplastic polymer is 80:20 to 97:3.

8. A composite as claimed in any one of claims 1 to 7 wherein the vinyl monomers in said vinyl polymer are vinyl halides.

9. A composite as claimed in claim 8 wherein the vinyl monomers in said vinyl polymer are vinyl chloride.

10. A composite as claimed in any one of claims 1 to 9 wherein said vinyl polymer and thermoplastic polymer have a common processing temperature.

11. A polymer composite comprising a vinyl polymer and a thermopolymer, which, when struck by a ball with an impact energy of at least 1 J at a temperature lower than -20°C, does not fragment.

12. A process for the preparation of a polymer composite as claimed in any one of claims 1 to 10, said process comprising admixing a vinyl polymer and a thermoplastic polymer at a temperature at which both polymers are molten.

13. A moulded article comprising a polymer composite as claimed in any one of claims 1 to 10.

**European Patent Office**

## EUROPEAN SEARCH REPORT

Application Number

EP 99 30 0831

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 576 368 A (SUGIURA TSUGUNORI ET AL) 19 November 1996 * claims; examples * | 1-13 | C08L101/00 C08L27/06 //(C08L27/06, 75:04) |
| X | WO 90 06970 A (HOLMSUND GOLV AB) 28 June 1990 * claims * | 1-13 | |
| X | GB 1 270 836 A (ELASTOMER AG) 19 April 1972 * claims; examples * | 1-13 | |
| X | DATABASE WPI Section Ch, Week 7742 Derwent Publications Ltd., London, GB; Class A14, AN 77-75303Y XP002103058 & JP 52 108454 A (KAO SOAP CO LTD) , 10 September 1977 * abstract * | 1-13 | |
| X | US 2 606 162 A (D.H. COFFEY ET AL.) 5 August 1952 * claims; examples * | 1-13 | TECHNICAL FIELDS SEARCHED (Int.Cl.6) C08L |

The present search report has been drawn up for all claims

| Place of search | Date of completion of the search | Examiner |
|---|---|---|
| THE HAGUE | 19 May 1999 | DE LOS ARCOS, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 0 934 983 A1

**ANNEX TO THE EUROPEAN SEARCH REPORT
ON EUROPEAN PATENT APPLICATION NO.**

EP 99 30 0831

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-1999

| Patent document cited in search report | | Publication date | Patent family member(s) | | Publication date |
|---|---|---|---|---|---|
| US 5576368 | A | 19-11-1996 | JP | 2701588 B | 21-01-1998 |
| | | | JP | 4348151 A | 03-12-1992 |
| | | | JP | 2576716 B | 29-01-1997 |
| | | | JP | 4349052 A | 03-12-1992 |
| WO 9006970 | A | 28-06-1990 | AT | 136570 T | 15-04-1996 |
| | | | AU | 4755590 A | 10-07-1990 |
| | | | DE | 68926244 D | 15-05-1996 |
| | | | EP | 0447445 A | 25-09-1991 |
| | | | FI | 96700 B | 30-04-1996 |
| | | | SE | 8804488 A | 06-06-1991 |
| | | | SE | 468382 B | 11-01-1993 |
| | | | SE | 9101726 A | 06-06-1991 |
| GB 1270836 | A | 19-04-1972 | BG | 17336 A | 25-07-1973 |
| | | | CH | 515944 A | 30-11-1971 |
| | | | DE | 1769570 A | 04-11-1971 |
| | | | FR | 2010526 A | 20-02-1970 |
| | | | NL | 6902947 A | 12-12-1969 |
| US 2606162 | A | 05-08-1952 | NONE | | |

EPO FORM P0459

For more details about this annex : see Official Journal of the European Patent Office, No. 12/82